Europäisches Patentamt

European Patent Office

Office européen des brevets

(19)

(11) Veröffentlichungsnummer : **0 144 686**
**B1**

(12) # EUROPÄISCHE PATENTSCHRIFT

(45) Veröffentlichungstag der Patentschrift :
16.06.87

(51) Int. Cl.⁴ : **B 65 G 53/56, F 23 C 11/02**

(21) Anmeldenummer : **84112887.9**

(22) Anmeldetag : **25.10.84**

(54) **Pneumatische Transportanlage für pulver- oder kornförmiges Material.**

(30) Priorität : **31.10.83 SE 8305967**

(43) Veröffentlichungstag der Anmeldung :
**19.06.85 Patentblatt 85/25**

(45) Bekanntmachung des Hinweises auf die Patenterteilung : **16.06.87 Patentblatt 87/25**

(84) Benannte Vertragsstaaten :
**AT BE CH DE FR GB IT LI LU NL**

(56) Entgegenhaltungen :
**CH-A- 592 007**
**DE-B- 1 082 783**
**US-A- 3 204 942**

(73) Patentinhaber : **ASEA Stal Aktiebolag**
**S-612 20 Finspang (SE)**

(72) Erfinder : **Brännström, Roine, Dipl.-Ing.**
**Pirvägen 38**
**S-612 00 Finspang (SE)**

(74) Vertreter : **Boecker, Joachim, Dr.-Ing.**
**Rathenauplatz 2-8**
**D-6000 Frankfurt a.M. 1 (DE)**

## Beschreibung

Die vorliegende Erfindung betrifft eine pneumatische Transportanlage für pulver- oder kornförmiges Material mit einem Verteiler bzw. Umschaltventil gemäß dem Oberbegriff des Anspruches 1.

Transportanlagen der genannten Art werden beispielsweise benötigt in einer Anlage mit einem Vorratsbehälter, aus dem Material zu einem von mehreren an die Transportanlage angeschlossenen Aufnahmebehältern transportiert werden soll.

Ferner hat die Erfindung Bedeutung für eine Verbrennunglage, in welcher der Brennstoff in einem unter Druck stehenden Wirbelbett, normalerweise PFBC-Anlage genannt, verbrannt wird. Dabei variieren der Druck und die Aschenmenge sehr stark in Abhängigkeit vom Belastungszustand der PFBC-Anlage. Eine solche Ascheausschubvorrichtung ist ausführlich in der EP-A-83-306073.4 beschrieben. Das Rohrsystem der Ascheausschubvorrichtung besteht aus einer Anzahl in Reihe geschalteter Rohre, durch welche der Asche-Gasstrom transportiert wird, wobei beim Übergang von einem Rohr in das folgende der Asche-Gasstrom in einer an den benachbarten Enden der beiden Rohre vorhandenen Wendekammer umgelenkt wird. Ein Problem besteht hierbei darin, daß eine für Vollastbetrieb dimensionierte Ascheausschubvorrichtung bei Teillastbetrieb nicht zufriedenstellend arbeitet, da die Transportgeschwindigkeit dann so gering wird, daß eine Unterbrechung durch Verstopfen eintreten kann.

Aus der US-A-3 204 942 ist ein Verteiler für pneumatisch transportiertes partikelförmiges Material, wie beispielsweise Kohle, bekannt, die beispielsweise einem Gebläseofen zur Verbrennung zugeführt wird. Der Verteiler besteht aus einem hohlen Behälter, welchem über ein Eingangsrohr das zu verteilende Material zugeführt wird. Über eine Reihe weiterer an den Behälter angeschlossener Rohre wird das Material unter gleichmäßiger Verteilung auf die Rohre abgeführt. Mit diesem Verteiler ist lediglich eine Aufteilung des Partikelstroms in eine Mehrzahl kleinerer Ströme möglich. Eine Umschaltung des Stroms von einem Abgangsrohr auf ein anderes ist nicht möglich. Für eine wahlweise Verteilung sind in den abgehenden Rohren zusätzlich Ventile erforderlich.

Der Erfindung liegt die Aufgabe zugrunde, eine pneumatische Transportanlage der eingangs genannten Art zu entwickeln, mit welcher es möglich ist, mit Hilfe einer Umschaltmöglichkeit aus mehreren möglichen Transportwegen einen auszuwählen, und wobei die Gefahr eines Verstopfens von Transportwegen sowie die Gefahr eines schnellen Verschleißes der den Transportweg bildenden Bauteile so gering wie möglich sind. Ferner soll die Transportanlage so beschaffen sein, daß sie bei Verwendung in einer PFBC-Anlage das Kurzschließen von Teilen des Transportweges in der Ascheausschubvorrichtung ermöglicht, um dadurch das Betriebsverhalten der Ascheausschubvorrichtung den unterschiedlichen Belastungszuständen der PFBC-Anlage anpassen zu können.

Zur Lösung dieser Aufgabe wird eine pneumatische Transportanlage gemäß dem Oberbegriff des Anspruches 1 vorgeschlagen, welche erfindungsgemäß die im kennzeichnenden Teil des Anspruches 1 genannten Merkmale hat.

Vorteilhafte Ausgestaltungen der Erfindung sind in den weiteren Ansprüchen genannt.

Gemäß der Erfindung enthält die Transportanlage ein Verteiler- bzw. Umschaltventil mit einer Kammer mit einem Blindraum zur Bildung eines erosionsverhindernden Kissens aus Pulver. Das Ventil hat mehrere Anschlüsse für Transportleitungen. Beispielsweise mündet eine Zustromleitung in die genannte Kammer direkt gegenüber dem genannten Blindraum. Durch Drehung eines drehbar ausgebildeten Schiebers kann dieser so eingestellt werden, daß die Kammer mit dem Blindraum oder ein an diese Kammer angeschlossener Kanal in eine solche Lage gebracht wird, daß eine Verbindung mit einer frei gewählten Ausschubleitung zustandekommt. Eine Zustromleitung kann zentral an ein Ventilgehäuse mit einem drehbaren Schieber angeschlossen sein, während die Ausschubleitungen radial angeschlossen sein können. Bei einer zweiten Ausführungsform können sowohl die Zustromleitungen wie die Ausschubleitungen alle an dieselbe Stirnwand des Ventilgehäuses angeschlossen sein, wobei die Ausschubleitungen radial außerhalb der Zustromleitung angeschlossen sind. Bei einer dritten Ausführungsform kann die Zustromleitung an die eine Stirnwand des Ventils angeschlossen sein, während mehrere Ausschubleitungen an die andere Stirnwand des Ventils angeschlossen sind. In einem Ventil mit radialem Anschluß der Ausschubleitungen hat der Schieber eine axiale Bohrung, die mit dem Anschluß der Zustromleitung fluchtet. Ferner ist eine radial gerichtete Bohrung vorhanden, die in die axiale Bohrung mündet, und zwar eine Strecke oberhalb des Bodens der axialen Bohrung, so daß sich in deren innerem Teil ein Blindraum bildet. Durch Drehung des Schiebers kann die genannte radiale Bohrung in eine solche Lage gebracht werden, das sie in eine Ausschubleitung mündet. Bei der Ausführungsform, bei welcher sowohl die Zustromleitung als auch die Ausschubleitung an derselben Stirnwand angeschlossen sind, kann der Schieber mit einer an der Stirnwand mündenden Aussparung versehen sein, die sich radial vom Zentrum des Schiebers in Richtung zur Peripherie hin erstreckt. Diese Aussparung bildet einen radialen Umlenkungskanal, über welchen das strömende Medium aus der Zustromleitung in eine bestimmte von der Einstellung des Schiebers abhängenden Ausschubleitung umgelenkt wird.

Wenn die Erfindung in der Ascheausschubvorrichtung einer PFBC-Anlage verwendet wird, um zwecks Anpassung an den Belastungszustand einen Teil des Transportweges der Ascheausschubvorrichtung kurzzuschließen, dann können zwei Zustromleitungen und zwei Ausschubleitung an das Ventil angeschlossen sein. Der Schieber enthält dabei zwei Kammern (Aussparungen) der eingangs genannten Art. Die Leitungsanschlüsse und die Kammern sind räumlich derart angeordnet, daß in einer ersten Stellung des Schiebers eine erste Kammer eine erste Zustromleitung mit einer ersten Ausschubleitung verbindet, während eine zweite Kammer eine zweite Zustromleitung mit einer zweiten Ausschubleitung verbindet, und daß in einer zweiten Stellung des Schiebers die erste Kammer die erste Zustromleitung mit der zweiten Ausschubleitung verbindet. Im letztgenannten Falle wird der gesammte Teil des Transportweges der Ascheausschubvorrichtung, der zwischen den Anschlüssen für die erste Ausschubleitung und die zweite Zustromleitung liegt, kurzgeschlossen, so daß nur der restliche Teil der Ascheausschubvorrichtung benutzt wird.

Eine Ascheausschubvorrichtung kann mit mehreren Umschaltventilen ausgerüstet werden, so daß eine sehr genaue Anpassung der Betriebsverhältnisse der Ascheausschubvorrichtung an die Belastung der PFBC-Anlage erreicht werden kann. Es ist auch möglich, Umschaltventile so aufzubauen, daß mehrere Kurzschlußmöglichkeiten von Teilen des Transportweges in der Ascheausschubvorrichtung mit einem einzigen Umschaltventil vorgenommen werden können.

Dadurch, daß man die Länge des Transportweges in der Ascheausschubvorrichtung in der genannten Weise einstellen kann, ist eine geschmeidige Anpassung an den Teillastbetrieb möglich.

Anhand der in den Figuren gezeigten Ausführungsbeispiele soll die Erfindung näher erläutert werden. Es zeigen

Figur 1 schematisch eine pneumatische Transportanlage zur alternativen Überführung von pulver- oder kornförmigen Material aus einem Vorratsbehälter in einen von zwei Aufnahmebehältern,

Figur 2 einen axialen Schnitt durch ein Umschaltventil längs der Linie B-B in Figur 3,

Figur 3 einen radialen Schnitt durch das Umschaltventil längs der Linie A-A in Figur 2,

Figuren 4 und 5 axiale Schnitte durch andere Ausführungsformen von Umschaltventilen,

Figur 6 einen radialen Schnitt durch das Umschaltventil längs der Linie C-C in Figur 5,

Figur 7 einen radialen Schnitt durch das Umschaltventil längs der Linie D-D in Figur 5,

Figuren 8 und 9 zwei verschiedene Betriebszustände einer PFBC-Anlage, in welcher die Transportanlage gemäß der Erfindung für die Transportvorrichtung der Asche verwendet wird, die in einem Zyklonenreiniger abgeschieden wurde,

Figuren 10 und 11 je einen radialen Schnitt längs der Linie G-G in Figur 12 bzw. Figur 13, in denen der Schieber des Ventils verschiedene Stellungen einnimmt,

Figuren 12 und 13 axiale Schnitte durch das Umschaltventil längs der Linie E-E bzw. F-F in Figur 10.

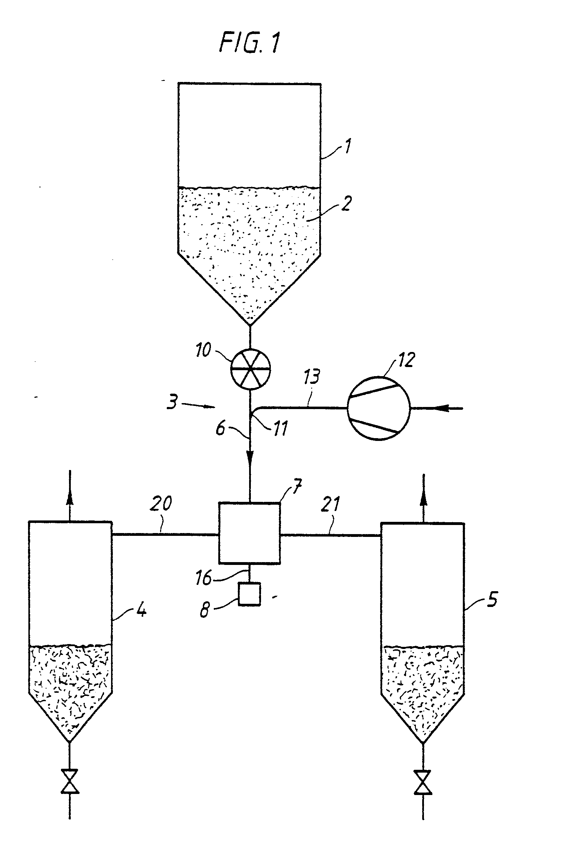

In Figur 1 bezeichnet 1 einen Behälter, der ein Pulver 2 enthält, das durch eine Transportanlage 3 alternativ zu einem der Behälter 4 oder 5 transportiert werden soll. Die Transportanlage 3 enthält eine Zustromleitung 6 zwischen dem Behälter 1 und einem Verteilerventil 7, das durch eine Betätigungsvorrichtung 8 betätigtbar ist. In der Zustromleitung 6 liegt ein Abzugsschieber 10 mit einer Ejektordüse 11, der Transportluft von einem Kompressor 12 über die Leitung 13 zugeführt wird.

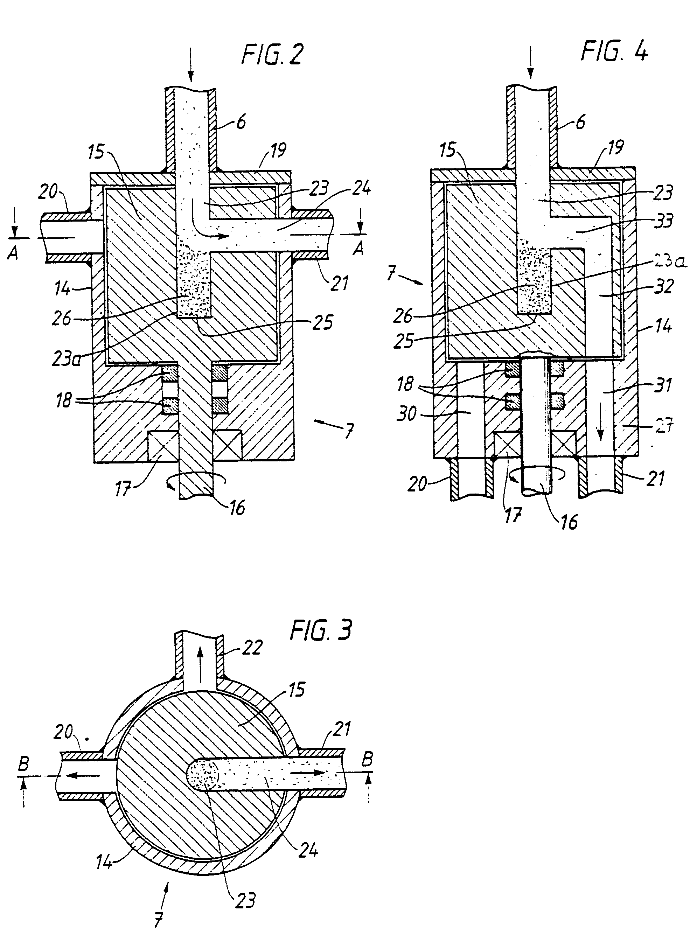

Das in der Anordnung nach Figur 1 vorhandene Ventil 7 ist im Prinzip in der in Figuren 2 und 3 gezeigten Weise aufgebaut. Zum Ventil gehört ein Ventilgehäuse 14 mit einem drehbaren Schieber 15, der über die Welle 16 mit der Antriebsvorrichtung 8 verbunden ist. Die Welle 16 ist mittels des Lagers 17 im Gehäuse 14 gelagert, und zwischen der Welle 16 und dem Gehäuse 14 sind Dichtungen 18 angeordnet. Die Leitung 6 ist zentral am Deckel 19 des Gehäuses angeschlossen. Die Ausschubleitungen 20 und 21 zwischen dem Ventil 7 und den Behältern 4 bzw. 5 sind radial an das Ventilgehäuse 14 angeschlossen. Das Ventilgehäuse 14 kann mit weiteren Anschlüssen für eine oder mehrere weitere Leitungen versehen sein, wie dies durch die Leitung 22 angedeutet ist. Der Ventilschieber hat eine zentrale axiale Bohrung 23, die im unteren Teil des Schiebers endet, sowie eine von der Peripherie radial verlaufende Bohrung 24, die oberhalb des Bodens 25 der axialen Bohrung 23 in diese einmündet. Der innere Teil 23a der Bohrung bildet einen Blindraum, in welchem Pulver ein erosionsverhinderndes Kissen 26 bildet. Durch Drehung des Schiebers um 180 Grad wird alternativ einer der Behälter 4 oder 5 mit dem Behälter 1 verbunden, so daß Pulver in den gewünschten Behälter transportiert werden kann. Bei der in Figur 4 gezeigten Ausführungsform des Ventils 7 ist die Zustromleitung ebenfalls an den Deckel 19 angeschlossen ; die Ausschubleitungen 20 und 21 sind dagegen in axialer Richtung an die Stirnwand 27 des Gehäuses 14 angeschlossen. Der Schieber 15 ist im gleichen radialen Abstand von der Mittellinie des Ventils wie die Bohrungen 30 und 31 in der Stirnwand 27 und die Ausschubleitungen 20 und 21 mit einer zweiten axialen Bohrung 32 versehen. Die Bohrungen 32 und 23 sind über einen radial gerichteten Kanal 33 miteinander verbunden. Der Anschluß des Kanals 33 an die Bohrung 23 liegt in axialer Richtung an einer solchen Stelle, daß sich oberhalb des Bodens 25 der Bohrung 23 ein Blindraum 23a bildet.

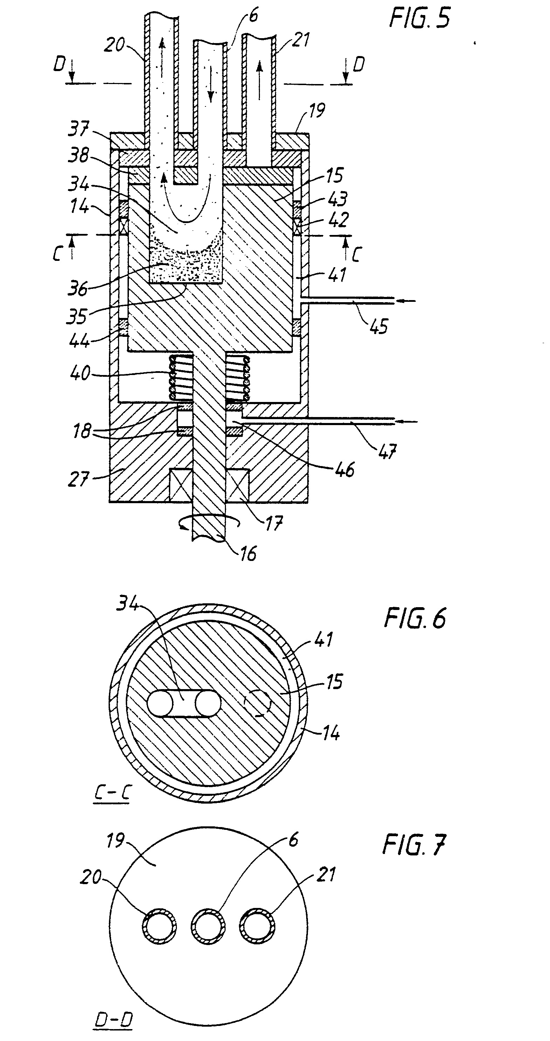

Figur 5 zeigt eine weitere Ausführungsform des Ventils 7. Bei dieser sind sowohl die Zustromleitung 6 wie auch die Ausschubleitungen 20 und 21 an dem Deckel 19 des Gehäuses 14 angeschlossen. Die Zustromleitung 6 liegt dabei konzentrisch zum Deckel 19, während die Ausschubleitungen 20 und 21 radial außerhalb der Mitte an den Deckel angeschlossen sind. Der rotierbare Schieber 15 ist bei dieser Ausführungsform des Ventils mit einer schlitzförmigen, radial gerichteten Aussparung 34 versehen, deren axiale Erstreckung so bemessen ist, daß sich an ihrem Boden 35 während des Betriebes ein erosionsverhinderndes Kissen 36 aus Pulver bildet. Die Aussparung 34 hat eine solche radiale Länge, daß sie die Zustromleitung 6 bei entsprechender Winkelstellung des Schiebers mit der Ausschubleitung 20 bzw. 21 verbindet. Mit Rücksicht darauf, daß viele Pulvermaterialien einen starken Verschleiß verursachen, können der Deckel 19 und der Schieber 15, wie in Figur 5 dargestellt, mit austauschbarem Verschleißfutter 37 und 38 aus einem gegen Verschleiß widerstandsfähigen Material versehen sein. Um den Verschleiß dieser Verschleißfutter zu kompensieren, wird der Schieber 15 von einer Feder 40 in Richtung auf den Deckel 19 gedrückt, so daß die Verschleißfutter 38 und 37 trotz ihres Verschleißes ständig gegeneinander gepreßt sind. Der Schieber 15 und das Gehäuse 14 werden vorzugsweise so ausgeführt, daß zwischen ihnen ein ringförmiger Spalt 41 vorhanden ist. In diesem Spalt sind ein Führungslager 42 sowie Dichtungsringe 43 und 44 angeordnet. Dem Spalt 41 wird über die Leitung 45 Sperrgas von einer nicht dargestellten Druckgasquelle zugeführt. Diese Druckgasquelle kann beispielsweise der Kompressor 12 in Figur 1 sein, der Gas für den pneumatischen Transport liefert. Auch dem Raum 46 zwischen den Dichtungen 18 wird Sperrgas von der Druckgasquelle über die Leitung 47 zugeführt. Sperrgas ist nur dann erforderlich wenn der pneumatische Transport bei hohem Druck ( > 4 bar (abs)) erfolgt.

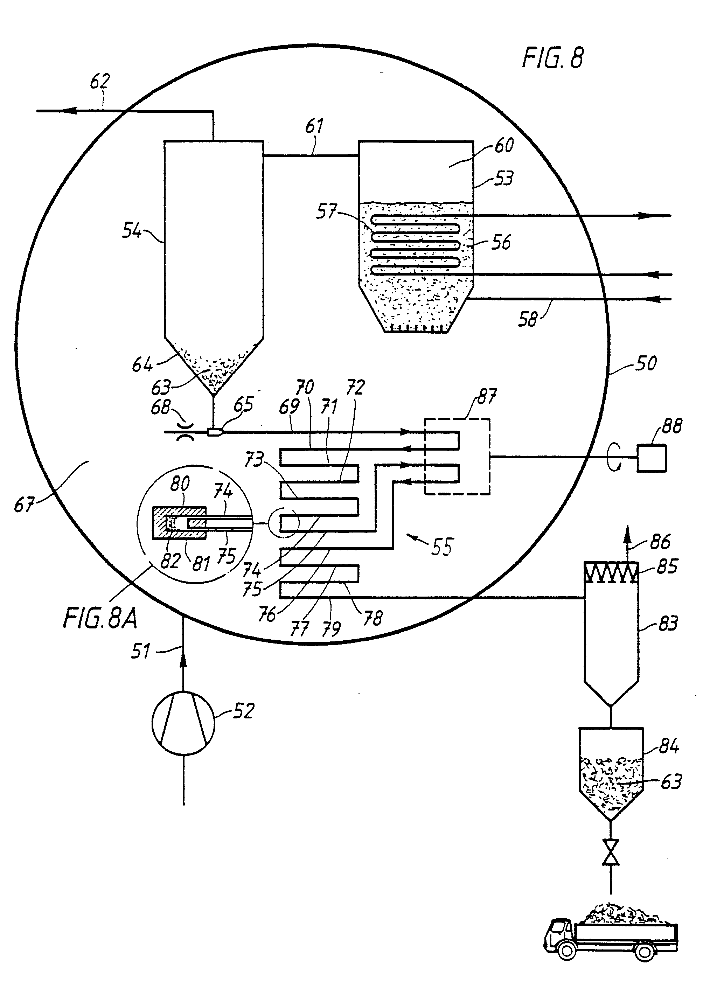

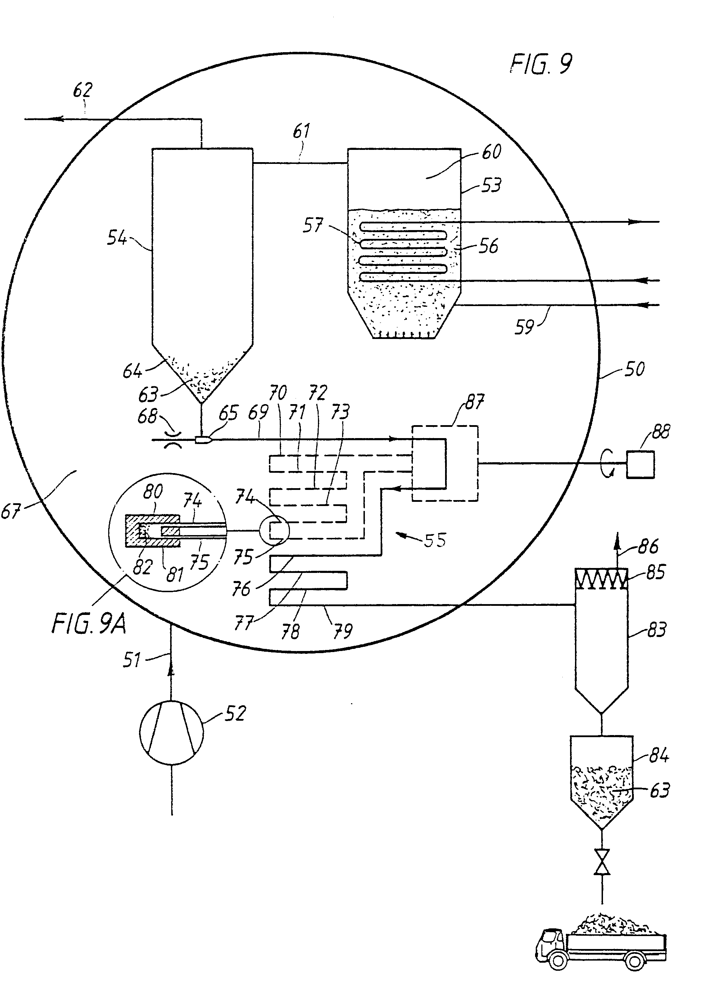

In der PFBC-Anlage nach den Figuren 8 und 9 wird die Erfindung in einem Ascheausschubsystem verwendet, um verschiedene Transportwege zu erhalten, damit die Transportlänge in dem Ausschubsystem in geeigneter Weise unterschiedlichen Betriebsverhältnissen angepaßt werden kann. In diesen Figuren bezeichnet 50 einen Druckbehälter. Durch die Leitung 51 wird dem Druckbehälter 50 Verbrennungsluft von einem Kompressor 52 zugeführt. In dem Druckbehälter 50 sind eine Brennkammer 53, ein Zyklon 54 und eine Ascheausschubvorrichtung 55 angeordnet. Der in Figur 8 gezeigte Zyklon 54 besteht in Wirklichkeit aus einer großen Anzahl von Zyklonen, die in parallelen Reihen zueinander angeordnet sind. In dem unteren Teil der Brennkammer 53 befindet sich ein Wirbelbett 56 und ein Rohrbündel 57, welches zur Kühlung des Wirbelbettes 56 und zur Erzeugung von Dampf für eine nicht dargestellte Dampfturbine dient. Brennstoff wird dem Wirbelbett durch eine Leitung 58 von einem nicht dargestellten Brennstoffvorrat zugeführt. Der freie Raum 60 oberhalb des Wirbelbetts 56 ist über eine Leitung 61 an den Zyklon 54 angeschlossen. In dem Zyklon 54 wird die von den Verbrennungsgasen mitgeführte Asche 63 abgeschieden, bevor die Verbrennungsgase über die Leitung 62 einer nicht dargestellten Gasturbine zugeführt werden. Die Asche sammelt sich in dem konischen Bodenteil 64 des Zyklons 54 und wird durch den Ejektor 65 zu einer Ascheausschubvorrichtung 55 geleitet, deren Aufbau von der Art ist, wie sie in der SE-A-8205748-0 näher beschrieben wird. Der Ejektor 65 und die Ascheausschubvorrichtung 55 werden aus dem Raum 67 des Druckgasbehälters 50 durch eine Drosselvorrichtung 68 mit Transportgas versorgt. Die Ascheausschubvorrichtung enthält eine Vielzahl paralleler Rohre, deren Anzahl zwischen zwanzig und hundert variieren kann. In der schematischen Darstellung in Figur 8 sind nur elf Rohre, nämlich 69 bis 79 dargestellt. Der Gas-Aschestrom in der Ascheausschubvorrichtung 55 wird aus einem Zustromrohr in ein Abstromrohr in einer Wendekammer 81 umgeleitet, die in Figur 8a dargestellt ist. In dieser Wendekammer wird der Strom um 180 Grad umgelenkt, um einen Druckabfall zu erzeugen. Der Raum 81 in den Wendekammern hat eine solche Tiefe, daß sich beim Betrieb ein erosionsverhinderndes Kissen 82 aus Pulver aufbaut. Das letzte Rohr 79 der Ascheausschubvorrichtung ist länger als die übrigen und verläuft durch die Wand des Druckbehälters 50. Es ist an einen Zyklon 83 angeschlossen, der Asche aus dem Transportgas abscheidet. Die Asche wird in dem Behälter 84 gesammelt. Das Transportgas wird in dem Filter 85 gefiltert, bevor es durch die Leitung 86 herausströmen kann.

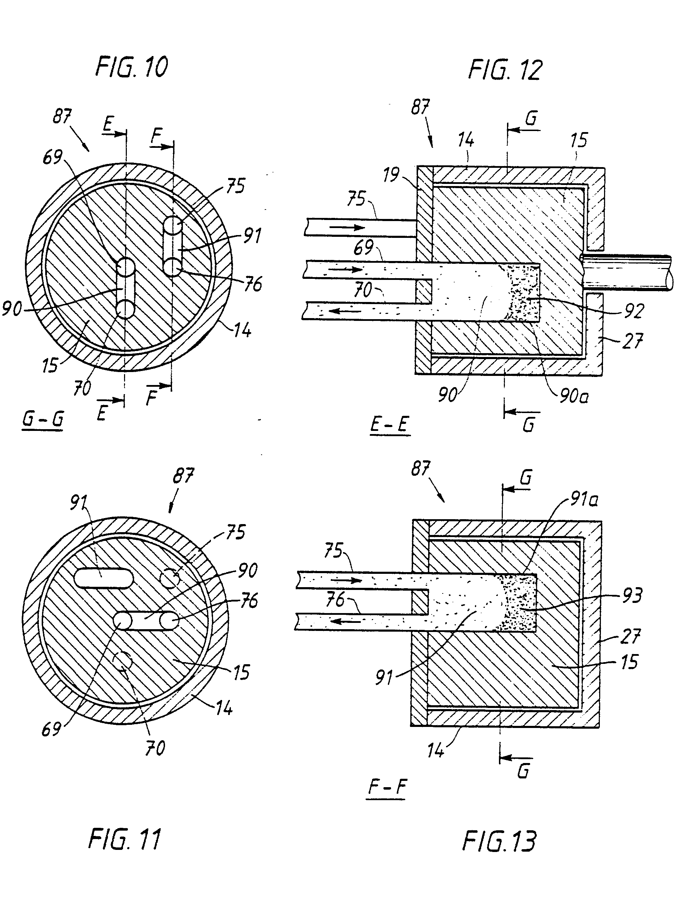

Zu der Ascheausschubvorrichtung gehört ein Umschaltventil 87 durch welches die Rohre 70 bis 75 kurzgeschlossen werden können, wenn die Anlage mit geringerer Last arbeitet. Aufbau und Arbeitsweise dieses Umschaltventils werden anhand der Figuren 10 bis 13 beschrieben. Das Umschaltventil 87 hat im Prinzip denselben Aufbau wie das in den Figuren 5-7 dargestellte Ventil. Der Unterschied liegt im wesentlichen in der Ausführung des Schiebers 15. Dieser hat zwei Aussparungen 90 und 91, deren inneren Teile 90a und 91a Blindräume bilden, in denen sich erosionsverhindernde Pulverkissen 92 bzw. 93 aufbauen. Der Deckel 19 des Ventils 87 hat vier Rohranschlüsse. Das Rohr 69 von dem Ejektor 65 ist in der Mitte des Deckels 19 des Umschaltventils 87 angeschlossen. Die Rohre 70, 75 und 76 sind an den Deckel 19 radial außerhalb des Rohres 69 angeschlossen. Die Anschlüsse der Rohre 70 und 76 haben gleichen radialen Abstand vom Anschluß des Rohrs 69.

Das Umschaltventil 87 dient dazu, die Ascheausschubvorrichtung 55 verschiedenen Betriebsverhältnissen anzupassen. Wenn die Anlage mit voller Leistung und hohem Druck im Behälter 50 betrieben wird, ist eine größere Anzahl von Umlenkungen des Asche-Gasstroms in der Ascheausschubvorrichtung zur Erreichung der erforderlichen Drucksenkung erforderlich als bei geringer Leistung und niedrigerem Arbeitsdruck. Bei Niederlastbetrieb kann der Druckfall in der Ascheausschubvorrichtung unzweckmäßig hoch und die Transportgeschwindigkeit zu niedrig werden, so daß die Gefahr einer Verstopfung besteht. Bei Vollastbetrieb muß der Asche-Gasstrom sämtliche Rohre der Ascheausschubvorrichtung 55 passieren, wie es in Figur 8 gezeigt ist. Der Schieber 15 des Ventils hat die in den Figuren 10, 12 und 13 gezeigte Stellung. In dem Umschaltventil 87 wird der Asche-Gasstrom aus dem Rohr 69 über die Aussparung 90 des Schiebers 15 in das Rohr 70 umgelenkt, strömt durch die Rohre 70-75 zu dem Umschaltventil 87 zurück und wird hier aus dem Rohr 75 über die Aussparung 91 des Schiebers 15 in das Rohr 76 umgelenkt. Der Asche-Gasstrom strömt dann durch die Rohre 76-79 weiter zu dem Zyklon 83 außerhalb des Druckbehälters 50.

Bei Teillastbetrieb werden die Rohre 70-75 kurzgeschlossen (überbrückt). Dies ist in Figur 9 gezeigt, in der die durchströmten Rohre 76-79 der Ascheausschubvorrichtung 55 als vollausgezogene Linien dargestellt sind und die kurzgeschlossenen Rohre 70-75 durch gestrichelte Linien dargestellt sind. Das Kurzschließen der Rohre 70-75 erfolgt dadurch, daß der Schieber 15 des Umschaltventils 87 aus der in Figur 10 gezeigten in die in Figur 11 gezeigte Stellung durch Drehung mittels der Antriebsvorrichtung 88 um 90 Grad umgestellt wird. Der aus dem Rohr 69 austretende Asche-Gasstrom wird dann über die Aussparung 90 im Schieber 15 direkt in das Rohr 76 umgeleitet. In einer Ascheausschubvorrichtung können mehrere Umschaltventile vorgesehen sein oder Ventile, die mehrere Umschaltalternativen zulassen, sodaß für jeden Leistungszustand der Anlage optimale Betriebsverhältnisse in der Ascheausschubvorrichtung eingestellt werden können.

In den Figuren sind nur Ventile mit einer Zustromleitung und zwei oder drei Ausschubleitungen sowie ein Umschaltventil mit einer Überbrückungsmöglichkeit für Teile des Transportweges in einer Ascheausschubvorrichtung gezeigt. Ventile mit mehreren Zufuhr- und Ausschubleitungen sind jedoch ebenso möglich, wie Ventile mit mehreren Überbrückungsmöglichkeiten des Transportweges in einer Ascheausschubvorrichtung oder einer anderen ähnlichen Vorrichtung. Es ist auch möglich, das Ventil einer Anlage anzupassen, in der Pulvermaterial gesammelt wird, das über mehrere Zustromleitungen zugeführt wird und über eine gemeinsame Ausschubleitung abgeführt wird, zum Beispiel um wahlfrei gleichzeitig Material aus zwei oder mehreren Vorratsbehältern einer mit mehreren Vorratsbehältern ausgerüsteten Anlage entnehmen zu können. Zu diesem Zweck können beispielsweise in den Ausführungsformen nach den Figuren 2 und 4 die Blindräume 23a statt vertikal nach unten im Sinne der Figuren horizontal nach links in Verlängerung des Kanals 33 beziehungsweise der Leitungen 20, 21 an die Bohrung 23 angeschlossen sein, wobei die Zustromleitungen und die Ausschubleitungen betriebsmäßig ihre Funktion umkehren.

**Patentansprüche**

1. Pneumatische Transportanlage für pulver- oder kornförmiges Material mit einem Verteiler- bzw. Umschaltventil (7 bzw. 87) dadurch gekennzeichnet, daß das Verteiler- bzw. Umschaltventil (7 bzw. 87) zur Wahl verschiedener Transportwege in der Transportanlage, einen Schieber (15) mit mindestens einer Kammer (23, 90, 91) aufweist, die mit einem Blindraum (23a, 90a) zur Bildung eines erosionsverhindernden Pulverkissens (26, 92) versehen ist, daß eine Zustromleitung (6, 69) beziehungswiese eine Ausschubleitung in der Kammer (23, 90, 91) mündet und daß die Kammer (23, 90, 91) oder ein in der Kammer mündender Kanal (24) in Abhängigkeit von der Stellung des Schiebers (15) wahlweise mit einer von zwei oder mehreren an das Ventilgehäuse angeschlossenen Ausschubleitungen (20, 21, 70, 76) beziehungsweise Zustromleitungen verbindbar ist.

2. Pneumatische Transportanlage nach Anspruch 1, dadurch gekennzeichnet, daß die Ausschubleitungen einen Winkel mit der Zustromleitung bilden, der 90 Grad oder nahezu 90 Grad beträgt.

3. Pneumatische Transportanlage nach Anspruch 1, dadurch gekennzeichnet, daß die Zustromleitung und die Ausschubleitungen (6, 20, 21, 69, 70, 76) parallel, jedoch radial gegeneinander verschoben angeordnet sind.

4. Pneumatische Transportanlage nach einem der vorhergehenden Ansprüche, dadurch gekennzeichnet, daß das Verteiler- bzw. Umschaltventil (7 bzw. 87) ein Ventilgehäuse (14) mit Anschlüssen für eine Zustromleitung (6, 69, 75) und mehrere Ausschubleitungen (20, 21, 22, 70, 76) sowie einen in dem Ventilgehäuse (14) drehbar angeordneten Schieber (15) enthält.

5. Pneumatische Transportanlage nach Anspruch 4, dadurch gekennzeichnet, daß die Kammer im Schieber in Form einer axialen Bohrung (23) koaxial zum Anschluß der Zustromleitung (6) an das Ventilgehäuse (14) ausgebildet ist u. der Schieber eine auf den Anschluß einer Ausschubleitung (20, 21) einstellbare radiale Bohrung (24) hat, welche an einer solchen Stelle in die axiale Bohrung (23) mündet, daß sich zwischen dieser Stelle und dem Boden der axialen Bohrung (23) ein Blindraum zum Aufbau eines erosionsverhindernden Pulverkissens bildet.

6. Pneumatische Transportanlage nach Anspruch 4, dadurch gekennzeichnet, daß eine Zustromleitung (6) und mehrere Ausschubleitungen (20, 21) an dieselbe Stirnwand (19) des Ventilgehäuses (14) des Verteilerventils (7) angeschlossen sind und daß in dem drehbaren Schieber (15) eine radial gerichtete Aussparung (34), vorhanden ist, die den genannten Blindraum und einen radialen Verbindungskanal zwischen den Anschlüssen für die Zustromleitung (6) und eine der Ausschubleitungen (20, 21) bildet.

7. Pneumatische Transportanlage nach Anspruch 4, dadurch gekennzeichnet, daß mehrere Zustromleitungen (69, 75) und Ausschubleitungen (70, 76) an dieselbe Stirnwand (19) des Ventilgehäuses (14) des Umschaltventils (87) angeschlossen sind und daß in dem drehbaren Schieber (15) mehrere axiale Aussparungen (90, 91) vorhanden sind.

8. Pneumatische Transportanlage nach einem der vorhergehenden Ansprüche, dadurch gekennzeichnet, daß die Transportanlage in einer PFBC-Anlage zum Ausschub von Wirbelbettmaterial oder Asche aus einem unter Druck stehenden Behälter (50) verwendet wird, wobei das Umschaltventil (87) in einer Wirbelbett- oder Ascheausschubvorrichtung (55) mit mehreren in Reihe geschalteten Rohren (69-79), zwischen welchen der Gas/Materialfluß zur Druckreduktion umgelenkt wird, derart angeschlossen ist, daß mehrere Rohre (70-75) der Ausschubvorrichtung (55) kurzgeschlossen werden können.

9. Pneumatische Transportanlage nach Anspruch 8, dadurch gekennzeichnet, daß zwei Rohre (69, 75) je eine Zustromleitungsanschluß und zwei Rohre (70, 76) je eine Ausschubleitungsanschluß für das Umschaltventil (87) bilden und daß die Anschlüsse und die in dem Schieber (15) in Form von Aussparungen angeordneten Kammern (90, 91) als Überströmungsräume so angeordnet sind, daß in einer ersten Stellung des Schiebers (15) eine erste Aussparung (90) eine erste zustromleitung (69) mit einer ersten Ausschubleitung (70) verbindet und eine zweite Aussparung (91) eine zweite Zustromleitung (75) mit einer zweiten Ausschubleitung (76) verbindet und daß in einer zweiten Stellung des Schiebers (15) die erste Aussparung (90) in dem Schieber (15) die erste Zustromleitung (69) mit der zweiten (76) verbindet, während die erste Ausschubleitung (70) und die zweite Zustromleitung (75) verschlossen sind.

## Claims

1. Pneumatic transportation system for powdered or granular material with a distributing or switching valve (7, 87), respectively, characterized in that for selecting of different transport paths in the transportation system the distributing or switching valve (7, 87), respectively, comprises a sliding means (15) with at least one chamber (23, 90, 91) provided with a blind space (23a, 90a) for the formation of an erosion-preventing powder cushion (26, 92), that a supply conduit (6, 69) and a discharge conduit, respectively, open out into said chamber (23, 90, 91), and that the chamber (23, 90, 91) or a channel (24) opening out into this chamber is alternatively connectable, on dependence of the position of the slide means (15), to one of two or more discharge conduits (20, 21, 70, 76) or supply conduits, respectively, which are connected to the valve housing.

2. Pneumatic transportation system according to Claim 1, characterized in that said discharge conduits make an angle of 90 or almost 90 degrees with the supply conduit.

3. Pneumatic transportation system according to Claim 2, characterized in that the supply conduits and the discharge conduits (6, 20, 21, 69, 70, 76) are arranged in parallel but radially offset relative to one another.

4. Pneumatic transportation system according to any of the preceding Claims, characterized in that the distributing or switching valve (7, 87), respectively, comprises a valve housing (14) with connection means for one supply conduit (6, 69, 75) and a plurality of discharge conduits (20, 21, 22, 70, 76) as well as a slide means (15) rotatably arranged in the valve housing (14).

5. Pneumatic transportation system according to Claim 4, characterized in that the chamber within said slide means takes the form of an axial bore coaxial with the connection of the supply conduit (6) to the valve housing (14), and that said slide means is provided with a bore (24) which can be positioned with respect to the connection of a discharge conduit (20, 21), the bore (24) opening out into the axial bore (23) at such a location that a blind space is formed for the generation of an erosion-preventing powder cushion between said location and the bottom of the axial bore (23).

6. Pneumatic transportation system according to Claim 4, characterized in that a supply conduit (6) and a plurality of discharge conduits (20, 21) are connected to the same end wall (19) of the valve housing (14) of the distributing valve (7), and that a radially extending compartment (34) is provided in the rotatable slide means (15) said compartment forming said blind space and a radial connection channel between the connections for the supply conduit (6) and one of the discharge conduits (20, 21).

7. Pneumatic transportation system, according to Claim 4, characterized in that a plurality of supply conduits (69, 75) and discharge conduits (70, 76) are connected to the same end wall (19) of the valve housing of the switching valve (87), and that the rotatable slide means (15) is provided with a plurality of axial compartments (90, 91).

8. Pneumatic transportation system according to any of the preceding claims, characterized in that the transportation system is utilized in a PFBC plant for the discharge of fluidizable bed material or ashes from a container (50), which is under pressure, said switching valve (87) being connected in a fluidizable bed or ash discharge device (55), which comprises a plurality of series-connected pipes (69-79) between which the gas/material flow is diverted to reduce the pressure, in such a manner that a number of said pipes (70-75) of the discharge device (55) can be shortcircuited.

9. Pneumatic transportation system according to Claim 8, characterized in that two pipes (69, 75) form a supply conduit connection and two pipes (70, 76) form a discharge conduit connection of the switching valve (87), and that the connections and the chambers (90, 91) arranged in the slide means in the form of compartments are arranged as overflow spaces in such a way that in a first position of the slide means (15) a first compartment (90) connects a first supply conduit (69) with a first discharge conduit (70) and a second compartment (91) connects a second supply conduit (75) with a second discharge conduit (76), and that in a second position of the slide means (15) the first compartment (90) in the slide means (15) connects the first supply conduit (69) with the second (67) while the first discharge conduit (70) and the second supply conduit (75) are closed.

## Revendications

1. Installation de transport pneumatique pour un matériau pulvérulent ou granulaire comportant une vanne de distribution ou de commutation (7 ou 87), caractérisée par le fait que la vanne de distribution ou de commutation (7 ou 87) comporte, pour la sélection de voies différentes de transport dans l'installation de transport, un tiroir (15) comportant au moins une chambre (23, 90, 91), qui est munie d'une cavité ouverte (23a, 90a) servant à former un coussin de poudre (26, 92) empêchant l'érosion, qu'une canalisation d'alimentation (6, 69) ou une canalisation de refoulement débouche dans la chambre (23, 98, 91) et que la chambre (23, 90, 91) ou un canal (24) débouchant dans cette chambre peut être reliée au choix, en fonction de la position du tiroir (15), à l'une de deux canalisations de refoulement (20, 21, 70, 76) ou canalisations d'alimentation, raccordées au carter de vanne.

2. Installation de transport pneumatique selon la revendication 1, caractérisée par le fait que les canalisations de refoulement font, avec la canalisation d'alimentation, un angle, qui est égal à 90 degrés ou approximativement à 90 degrés.

3. Installation de transport suivant la revendication 1, caractérisée par le fait que la canalisation d'alimentation et la canalisation de refoulement (6, 20, 21, 69, 70, 76) sont disposées en parallèle, mais en étant décalées axialement l'une par rapport à l'autre.

4. Installation de transport pneumatique suivant l'une des revendications précédentes, caractérisée par le fait que la vanne de distribution ou de commutation (7 ou 87) contient un carter de vanne (14) comportant des raccords pour une canalisation d'alimentation (6, 69, 75) et pour plusieurs canalisations de refoulement (20, 21, 22, 70, 76) ainsi qu'un tiroir (15) monté rotatif dans le carter de vanne (14).

5. Installation de transport pneumatique suivant la revendication 4, caractérisée par le fait que la chambre située dans le tiroir est réalisée sous la forme d'un perçage axial (23) coaxial au raccord de la canalisation d'alimentation (6) sur le carter de vanne (14) et que le tiroir possède un perçage radial (24) pouvant être réglé sur le raccord d'une canalisation de refoulement (20, 21) et qui débouche dans le perçage axial (23) en un emplacement tel qu'entre cet emplacement et le fond du perçage axial (23) se trouve formée une cavité ouverte servant à l'établissement d'un coussin de poudre empêchant l'érosion.

6. Installation de transport pneumatique suivant la revendication 4, caractérisée par le fait qu'une canalisation d'alimentation (6) et plusieurs canalisations de refoulement (20, 21) sont raccordées à la même paroi frontale (19) du carter de vanne (14) de la soupape de distribution (7) et que dans le tiroir rotatif (15) se trouve ménagé un évidement radial (34), qui forme ladite cavité et un canal radial de liaison entre les raccords pour la canalisation d'alimentation (6) et l'une des canalisations de refoulement (20, 21).

7. Installation de transport pneumatique suivant la revendication 4, caractérisée par le fait que plusieurs canalisations d'alimentation (69, 75) et plusieurs canalisations de refoulement (70, 76) sont raccordées à cette même paroi frontale (19) du carter (14) à la vanne de commutation (87) et que plusieurs évidements axiaux (90, 91) sont présents dans le tiroir rotatif (15).

8. Installation de transport pneumatique suivant l'une des revendications précédentes, caractérisée par le fait que l'installation de transport est utilisée dans une installation PFBC pour réaliser le refoulement du matériau d'un lit fluidisé ou de la cendre hors d'un récipient sous pression (50), la vanne de commutation (87) étant raccordée, dans un dispositif (55) de refoulement d'un lit fluidisé ou de la cendre comportant plusieurs tubes (69-79) raccordés en série et entre lesquels le courant de gaz/matériau est commuté pour établir une réduction de pression, de telle sorte que plusieurs tubes (70-75) du dispositif de refoulement (55) peuvent être contournés.

9. Installation de transport pneumatique suivant la revendication 8, caractérisée par le fait que deux tubes (69, 75) forment respectivement un raccord de la canalisation d'alimentation et deux tubes (70, 76) forment respectivement un raccord pour la canalisation de refoulement pour la vanne de commutation (87), et que les raccords et les chambres (90, 91), présentes dans le tiroir (15) sous la forme d'évidements, sont disposés en tant que chambres de trop-plein de telle manière que, lorsque le tiroir (15) est dans une première position, le premier évidement (90) relie une première canalisation d'alimentation (69) à une première canalisation de refoulement (70) et qu'un second évidement (91) relie une seconde canalisation d'alimentation (75) à une seconde canalisation de refoulement (76), et que lorsque le tiroir (15) est dans une seconde position, le premier évidement (90) situé dans le tiroir (15) relie la première canalisation d'alimentation (69) à la seconde canalisation de refoulement (76), tandis que la première canalisation de refoulement (70) et la seconde canalisation d'alimentation (75) sont fermées.

## FIG. 1

FIG. 2

FIG. 4

FIG. 3

0 144 686

FIG. 5

FIG. 6

C - C

FIG. 7

D - D

3

FIG. 8

FIG. 8A

FIG. 9

FIG.9A

FIG. 10

G - G

FIG. 11

FIG. 12

E - E

F - F

FIG. 13